# EUROPÄISCHE PATENTSCHRIFT

(11) **EP 2 900 592 B1**
(45) Veröffentlichungstag und Bekanntmachung des Hinweises auf die Patenterteilung: **04.12.2019**
(21) Anmeldenummer: 13770679.2
(22) Anmeldetag: 27.09.2013
(51) Int. Cl.: C01B 3/50, B01D 53/22

(54) **VERFAHREN ZUR GEWINNUNG VON WASSERSTOFF UND VORRICHTUNG HIERFÜR**
METHOD FOR OBTAINING HYDROGEN, AND CORRESPONDING DEVICE
PROCÉDÉ DE PRODUCTION D'HYDROGÈNE ET DISPOSITIF CORRESPONDANT

(30) Priorität: 27.09.2012 DE 102012109154
(43) Veröffentlichungstag der Anmeldung: 05.08.2015
(73) Patentinhaber: Mahnken & Partner GmbH, 27367 Ahausen (DE)
(72) Erfinder: HUBER, Anna, 24966 Sörup (DE); LORENZEN, Hinrich, 24966 Sörup (DE); MAHNKEN, Claus-Lüder, 27367 Ahausen (DE); RECK, Siegfried, 31582 Nienburg (DE); ROSSKAMP, Sebastian, 21680 Stade (DE); THIESEN, Dieter, 24891 Struxdorf (DE)
(74) Vertreter: Kröncke, Rolf
(86) Internationale Anmeldenummer: PCT/EP2013/070179
(87) Internationale Veröffentlichungsnummer: WO 2014/049115

(56) Entgegenhaltungen:
- EP-A2- 0 199 844
- DE-A1- 2 823 521
- DE-C1- 19 920 517
- US-A- 3 279 154
- US-A- 3 392 510
- US-A- 3 972 695
- US-B2- 6 773 472
- DONGLAI XIE ET AL: "Permeation efficiency of PdAg membrane modules with porous stainless steel substrates", SEPARATION AND PURIFICATION TECHNOLOGY, ELSEVIER SCIENCE, AMSTERDAM, NL, Bd. 89, 12. Januar 2012 (2012-01-12), Seiten 189-192, XP028469162, ISSN: 1383-5866, DOI: 10.1016/J.SEPPUR.2012.01.030 [gefunden am 2012-01-21]

## Beschreibung

Die vorliegende Erfindung betrifft ein Verfahren zur Gewinnung von hochreinem Wasserstoff aus einem Rohgas. Das Verfahren macht sich zu Nutze, dass ein semipermeables Material aus Metall oder Metalllegierung zu Beginn des Verfahrens erwärmt bzw. behandelt wird, bevorzugt wird ein elektrischer Strom durch das semipermeable Material zu Beginn des Verfahrens geleitet, um die Menge an durchtretendem Wasserstoff zu erhöhen. Weiterhin wird eine Vorrichtung zur Gewinnung von hochreinem Wasserstoff aus Rohgas beschrieben, diese Vorrichtung umfasst ein semipermeables Material, das im Innenraum in einem Druckgefäß im Innenbereich zum äußeren Bereich des Druckgefäßes abgrenzt und dieses semipermeable Material durchlässig für Wasserstoff ist, wobei diese Vorrichtung derart ausgebildet ist, dass insbesondere durch elektrische Energie das semipermeable Material zumindest abschnittsweise für zumindest einen ausgewählten Zeitraum erwärmbar bzw. behandelbar ist.

### Stand der Technik

Aufgereinigtes Wasserstoffgas findet in verschiedenen technischen Bereichen Anwendung. So kann z.B. aus Pyrolysegas aus z.B. nachwachsenden Rohstoffen Wasserstoff abgetrennt werden. Weitere Komponenten der Pyrolysegase sind Kohlenmonoxid, Kohlendioxid und Methan.

Zur Gewinnung von reinem oder zumindest größtenteils reinem Wasserstoff sind verschiedenste Vorrichtungen und Verfahren bekannt, bei denen der Wasserstoff mittels großem Druck und sehr niedriger Temperatur aus anderen Gasen bzw. Gasgemischen durch Verflüssigung abgeteilt werden kann. Dies ist allerdings extrem aufwändig und teuer. Außerdem kann mit diesen Vorrichtungen bzw. Verfahren kein hochreiner Wasserstoff erzeugt werden, da auch andere Gase bzw. Fremdstoffe in der dann flüssigen Wasserstoffphase verbleiben.

Weiterhin gibt es Vorschläge den Wasserstoff mit Hilfe von semipermeablem Material, wie semipermeablen Trennwänden, die wasserstoffdurchlässig sind, abzutrennen.

Verfahren, bei denen semipermeable Materialien eingesetzt werden, sind z.B. aus der DE 28 23 521 bekannt. Auch die DE 33 19 305 beschreibt entsprechende Verfahren zum Konzentrieren und Abtrennen von Wasserstoff aus einem Gasgemisch, in dem poröse Materialien eingesetzt werden. Als geeignete poröse Materialien werden z.B. Glas beschrieben. Weiterhin werden z.B. palladiumhaltige Materialien als geeignete Materialien genannt. Dabei wird z.B. im Bereich der palladiumhaltigen Materialien eine permanente Erhitzung der Materialien beschrieben. Aus der DE 600 20 772 T2 ist ein Verfahren zum Abtrennen von Wasserstoff aus einem wasserstoffhaltigen Gasgemisch mit Hilfe einer leitfähigen Membran aus einem Oxid des Perovskittyps bekannt.

Die DE 10 2010 049 792 beschreibt ein Kleinkraftwerk, bei der eine Vorrichtung zur Abscheidung von hochreinem Wasserstoff aus einem Pyrolysegas vorhanden ist, diese Vorrichtung umfasst einen Innenraum umgebendes Gehäuse mit zumindest einer, im Gehäuse angeordneten, einen mit Pyrolysegas zumindest teilweise gefüllten Bereich abtrennenden semipermeablen Trennwand. Durch diese ist hochreiner Wasserstoff aus dem Pyrolysegas abscheidbar. Weiterhin schlägt dieses Dokument ein Verfahren zur Abscheidung hochreinen Wasserstoffs vor, dieses Verfahren erfolgt mittels einer semipermeablen Trennwand. Als geeignetes Material für die semipermeable Trennwand wird dabei ferritisches Eisen beispielsweise Roheisen vorgeschlagen. Insbesondere wird hier beschrieben, dass die semipermeable Trennwand z.B. in Form von Eisenrohren umgeben von einem elektrischen Leiter um z.B. ein Magnetfeld zu liefern, das die Diffusion von Wasserstoff fördern soll, vorliegt. Weiter sei es bevorzugt, dass Pyrolysegas im erwärmten Zustand von über 400°C zuzuführen.

Allerdings ist eine permanente Beaufschlagung der Trennwand mit Strom und das permanente Erwärmen des Pyrolysegases kostenintensiv. Aus der Theorie ist bekannt, dass die Diffusionskonstante des Eisens exponentiell mit der Temperatur zunimmt, so dass höhere Diffusionsraten für den Wasserstoff bei höheren Temperaturen erreicht werden.

Aufgabe der vorliegenden Erfindung ist es, ein Verfahren bereitzustellen, das es erlaubt, kostengünstig Wasserstoffgas aus z.B. Pyrolysegas oder anderen Primärgasen abzutrennen.

### Beschreibung der Erfindung

Es wurde nun überraschend festgestellt, dass die Diffusion von Wasserstoff aus Primärgas durch ein semipermeables Material einfach verstärkt werden kann, indem für zumindest einen kurzen Zeitraum das semipermeable Material erwärmt bzw. behandelt wird und diese Maßnahmen des Erwärmens nach Beginn der Diffusion nicht mehr notwendig sind und zumindest unterbrochen werden können, die Diffusion des Wasserstoffs durch das semipermeable Material aber weiterläuft.

In einem ersten Aspekt richtet sich die vorliegende Erfindung daher auf ein Verfahren gemäß Anspruch 1 zur Gewinnung von hochreinem Wasserstoff aus einem Rohgas, wobei das Rohgas unter Druck in ein erstes Druckgefäß geleitet wird und dieses erste Druckgefäß zu einem zweiten Druckgefäß zumindest teilweise mit einem semipermeablen Material abgegrenzt ist, wobei das erste Druckgefäß zum zweiten Druckgefäß vollständig abgeschlossen ist und wobei der hochreine Wasserstoff über dieses semipermeable Material in das zweite Druckgefäß abgeschieden wird, dadurch gekennzeichnet, dass das semipermeable Material ein Metall oder eine Metalllegierung ist und dieses semipermeable Material zumindest zu Beginn des Verfahrens erwärmt wird und diese Erwärmung zumindest nach Erhöhung der Menge an durchtretendem Wasserstoff durch dieses semipermeable Material zumindest unterbrochen wird.

In einer Ausführungsform weist dabei das erste Druckgefäß einen Innenbereich auf, der zum Innenraum des ersten Druckgefäßes vollständig abgeschlossen ist, dieser Innenbereich ist zumindest teilweise, z.B. vollständig, mit einem semipermeablen Material zum Innenraum des ersten Druckgefäßes abgegrenzt und der hochreine Wasserstoff wird über dieses semipermeable Material in den Innenbereich abgeschieden. Das Verfahren zeichnet sich dadurch aus, dass das semipermeable Material ein Metall oder eine Metalllegierung ist, wie im Anspruch 1 definiert, und dieses semipermeable Material zumindest zu Beginn des Verfahrens erwärmt wird. Diese Erwärmung erfolgt für einen Zeitraum der ausreicht, die Menge an durchtretendem Wasserstoff durch dieses semipermeable Material zu erhöhen.

Überraschenderweise zeigte sich, dass durch ein zeitweises oder abschnittsweises Erwärmen bzw. Behandeln des semipermeablen Materials die Diffusion des Wasserstoffes durch dieses semipermeable Material erhöht wird und nach Beenden einer Energiezufuhr zum Erwärmen des Materials, die Diffusion des Wasserstoffs durch das semipermeable Material in erhöhter Menge erfolgt. Dadurch ist es erfindungsgemäß möglich, die Abscheidung des Wasserstoffs ökonomisch durchzuführen, nämlich ohne permanente Zufuhr von Energie, um das semipermeable Material, oder auch das Rohgas permanent zu erwärmen.

Vorliegend wird unter "Erwärmen des Materials" verstanden, dass dem semipermeablen Material Energie in Form von elektrischer Energie und/oder Wärmeenergie zugeführt wird. Das "Erwärmen" oder "Behandeln" des Materials kann also durch verschiedene Maßnahmen, bevorzugt durch elektrische Energie erfolgen. Die "Erwärmung" oder "Behandlung" führt zu einer Erhöhung der Durchlässigkeit des Materials für Wasserstoff.

Vorliegend wird unter dem Ausdruck "semipermeables Material" verstanden, dass dieses Material geeignet ist, Wasserstoff abzuscheiden, während andere Gase nicht durch dieses Material durchtreten können.

Es handelt sich bei dem semipermeablen Material um eines, das ferritisches Eisen und/oder Roheisen und/oder Reineisen umfasst, bevorzugt aus ferritischem Eisen und/oder Roheisen und/oder Reineisen besteht. Bevorzugt findet dabei Reineisen Verwendung, wobei dieses einen Eisenanteil von vorzugsweise mehr als 99,8 % hat. Ein hoher Eisengehalt ist vorteilhaft für den Wasserstoffdurchtritt durch das semipermeable Material unter Rückhaltung anderen im Primärgas bzw. Rohgas vorhandenen Gasen.

Dabei wird davon ausgegangen, dass an der äußeren Oberfläche des Eisenrohres der molekulare Wasserstoff zu atomaren Wasserstoff dissoziiert. Dieser atomare Wasserstoff wird zunächst adsorbiert. Dabei wird davon ausgegangen, dass das Proton vom Elektron abgetrennt wird und das Proton entsprechend durch das Eisen diffundieren kann, um dann auf der inneren Oberflächen des Eisenrohres wieder zu atomaren Wasserstoff und dann zum molekularen Wasserstoff zu assoziieren.

Überraschenderweise konnte der Durchsatz des Wasserstoffs durch ein kurzzeitiges Erwärmen bzw. Behandeln des semipermeablen Materials, z.B. in Form eines Rohrs, z.B. durch Anlegen von elektrischer Energie, erhöht und auf einem hohen Niveau aufrechterhalten bleiben ohne weitere Energiezufuhr zu benötigen. Hierdurch kann der Energieaufwand zum Temperieren des Rohres maßgeblich verringert werden, was die Kosten bei der Gewinnung von hochreinem Wasserstoff deutlich verringert.

Es ist hierbei bevorzugt, dass der Strom als Wechselstrom direkt an das semipermeable Material angelegt wird, z.B. der elektrische Strom direkt an das Metallrohr angelegt wird. Dabei ist die Stromdichte bevorzugt eine über 10 Ampere pro Quadratmillimeter, z.B. 20 Ampere pro Quadratmillimeter oder größer.

Vorliegend wird unter dem Ausdruck "kurzzeitig" verstanden, dass ein Erwärmen oder Behandeln für einen Zeitraum erfolgt, der die Durchlässigkeit des semipermeablen Materials für Wasserstoff erhöht. Anschließend wird das Erwärmen oder Behandeln beendet oder unterbrochen. Das kurzzeitige Erwärmen bzw. Behandeln erfolgt am Anfang des Prozesses und wird gegebenenfalls, wenn z.B. die Diffusionsrate sich verringert, wiederholt.

Es ist daher insbesondere bevorzugt, dass das semipermeable Material nur zu Beginn des Verfahrens erwärmt wird für einen Zeitraum, ausreichend die Menge an durchtretendem Wasserstoff zu erhöhen. Alternativ kann das Erwärmen, z.B. mittels Strom, wie Wechselstrom, pulsierend erfolgen. Vorliegend wird unter dem Ausdruck "pulsierend" verstanden, dass der Strom für einen Zeitraum angelegt wird und nach einer Unterbrechung der Strom erneut angeschaltet wird. Der Zeitraum des Anlegens des Stroms kann dabei individuell eingestellt sein.

Ein solches Erwärmen findet zumindest abschnittsweise statt. Diese abschnittsweise Erwärmung kann durch Heizen über die Zufuhr von Wärme erfolgen. Bevorzugt findet aber ein zumindest abschnittsweises Erwärmen der semipermeablen Membran mit Hilfe von elektrischer Energie statt. Es ist daher bevorzugt, dass das semipermeable Material mit Hilfe von Strom, insbesondere elektrischem Wechselstrom, erwärmt wird. Dabei wird der elektrische Strom bevorzugt in Längsrichtung angelegt und nicht durch Umwinden eines Leiters um das semipermeable Material.

Als Strom kann ein üblicher Wechselstrom mit einer Frequenz von 50 Htz eingesetzt werden, alternativ kann aber auch ein Gleichstrom, z.B. ein pulsierender Gleichstrom, verwendet werden. Der Durchsatz von Wasserstoff durch das semipermeable Material steigt, sobald Strom an dieses angelegt wird.

Es zeigte sich hierbei, dass der Wasserstoffdurchsatz exponentiell abhängig ist von der angelegten Stromstärke. Es ist bevorzugt, dass die Stromdichte z.B. mindestens 10 Ampere pro Quadratmillimeter, z.B. mindestens 20 Ampere pro Quadratmillimeter.

Im Gegensatz zu der bisherigen Annahme, dass ein ständiges Erwärmen bzw. Beheizen des semipermeablen Materials notwendig ist und weiterhin der Annahme, dass ein Erwärmen des Rohgases auf Temperatur oberhalb von 400°C notwendig ist, konnte vorliegend festgestellt werden, dass ein initiales Erwärmen ausreichend ist, die Diffusion des Wasserstoffs durch das semipermeable Material zu erhöhen. Die Diffusionsrate bleibt dann auf einem hohen Niveau ohne dass eine weitere Zufuhr von Energie, sei es als Wärme oder als elektrische Energie, notwendig ist. Das semipermeable Material, wie das Metall, kann dabei vor Beginn des Verfahrens einem Glühen unterworfen werden. Dieses Glühen kann durch Wärme oder Strom erreicht werden.

Es ist bevorzugt, dass das Erwärmen ein Weichglühen des Metalls oder der Metalllegierung ist, bevorzugt ein zumindest kurzzeitiges Erwärmen auf eine Temperatur von 400°C bis 800°C. Bevorzugt wird das Erwärmen durch elektrische Energie z.B. durch Anlegen von elektrischem Wechselstrom erreicht. Es ist dabei insbesondere bevorzugt, dass eine hohe Stromstärke angelegt wird, da sich vorliegend gezeigt hat, dass der Wasserstoffdurchsatz exponentiell abhängig ist von der angelegten Stromstärke.

Weiterhin zeigte sich, dass durch anfängliches Anlegen des elektrischen Stroms der Durchsatz des Wasserstoffs durch das semipermeable Material deutlich erhöht werden kann im Vergleich zu einer reinen Temperaturerhöhung z.B. durch Zufuhr von Wärmeenergie.

In einer weiteren bevorzugten Ausführungsform wird das Rohgas unter Druck in das Druckgefäß geleitet, während im Inneren des Innenbereichs, in dem der Wasserstoff abgeschieden wird, dieser abgeschiedene Wasserstoff durch Unterdruck abgeleitet wird.

Das Rohgas kann dabei ein Trägergas enthalten, wie ein inertes Gas, z.B. CO₂ aber auch leichte Kohlenwasserstoffe, wie z.B. Methan (CH₄).

Das in das Druckgefäß eingebrachte Rohgas kann eines sein, das mit erhöhter Temperatur eingeleitet wird, es ist aber bevorzugt, dass das Rohgas mit einer Temperatur von kleiner 400°C, wie kleiner 300°C, insbesondere kleiner 200°C, wie kleiner 100°C, insbesondere mit Raumtemperatur in das Druckgefäß eingeleitet wird. Das heißt, es ist erfindungsgemäß nicht notwendig, dass das Rohgas vorab erhitzt wird, um gegebenenfalls auch das semipermeable Material zu erwärmen. Im Gegenteil, es ist in einer Ausführungsform bevorzugt, dass das Rohgas nicht erwärmt zugeführt wird.

Das Verfahren kann weiterhin den Schritt des Entfernens, z.B. ein Abspülen, des abgeschiedenen Wasserstoffes an dem semipermeablen Material umfassen, um die lokale Konzentration des Wasserstoffes zu reduzieren und die Abscheidung auf hohem Niveau aufrecht zu erhalten.

In einer Ausführungsform wird dabei das Rohgas unter Druck in den inneren Bereich geleitet. Dieser Innenbereich ist zumindest teilweise mit dem semipermeablen Material zum Innenraum des ersten Druckgefäßes abgegrenzt. Der hochreine Wasserstoff kann über dieses semipermeable Material in den Innenraum des ersten Druckgefäßes abgeschieden werden und z.B. mit Hilfe von Unterdruck abgezogen werden.

Weiterhin wird beschrieben, eine Vorrichtung zur Gewinnung von hochreinem Wasserstoff aus Rohgas mit einem ersten Druckgefäß und Zu- und Ableitungen für das Rohgas bzw. wasserstoffabgereichertem Rohgas, einem zweiten Druckgefäß, das vollständig gegenüber dem ersten Druckgefäß abgeschlossen ist und zu diesem zumindest teilweise mit einem semipermeablen Material abgegrenzt ist, wobei dieses semipermeable Material durchlässig ist für Wasserstoff, und zur Abscheidung von hochreinem Wasserstoff aus dem Rohgas, dadurch gekennzeichnet, dass das semipermeable Material, insbesondere durch elektrische Energie, zumindest abschnittsweise beheizbar ist und ein Metall oder eine Metalllegierung ist, insbesondere eingerichtet zur Durchführung des erfindungsgemäßen Verfahrens.

In einer Ausführungsform ist die Vorrichtung eine zur Gewinnung von hochreinem Wasserstoff aus Rohgas mit einem Druckgefäß und Zu- und Ableitungen für das Rohgas bzw. dem Wasserstoff abgereicherten Rohgas, einem im Innenraum des Druckgefäßes angeordneten Innenbereich, der vollständig gegenüber dem Innenraum des Druckgefäßes abgeschlossen ist und dieser Innenbereich zumindest teilweise mit einem semipermeablen Material zum Innenraum des Druckgefäßes abgegrenzt ist, wobei dieses semipermeable Material durchlässig ist für Wasserstoff, zur Abscheidung von hochreinem Wasserstoff aus dem Rohgas, dadurch gekennzeichnet, dass das semipermeable Material, insbesondere durch elektrische Energie, zumindest abschnittsweise erwärmbar bzw. behandelbar ist und die Vorrichtung derart eingerichtet ist, dass die Erwärmung bzw. Behandlung, kurzzeitig zumindest zu Beginn des Prozesses erfolgt.

Die Vorrichtung ist insbesondere eine, bei der das semipermeable Material eines ist enthaltend ferritisches Eisen und/oder Roheisen und/oder Reineisen, insbesondere aus diesen Materialien besteht.

Die Vorrichtung kann entsprechende Mittel zur Erzeugung von Über- und Unterdruck beinhalten.

Bevorzugt ist das semipermeable Material als Rohr gefertigt, bevorzugt können dabei innerhalb des Druckgefäßes mehrere, vorzugsweise gleiche Rohre mit dem semipermeablen Material vorliegen. Dadurch ist es möglich, die erfindungsgemäße Vorrichtung kompakt auszubilden. Eine entsprechende Ausbildung des semipermeablen Materials als Rohre erlaubt eine Vergrößerung der Oberfläche, so dass mehr Wasserstoff abgeschieden werden kann. Innerhalb oder außerhalb des Druckgefäßes können entsprechende Verteiler zur Verteilung des Rohgases bzw. Zusammenführung des abgereicherten Rohgases oder des abgeschiedenen Wasserstoffs angeordnet sein. Bevorzugt sind solche Verteiler bzw. entsprechende Ventilanordnungen innerhalb des Druckgefäßes angeordnet, damit nur jeweils ein Zulass und Auslass vorhanden sind.

Es ist möglich, dass das z.B. in Form von Rohren vorliegende semipermeable Material in verschiedenen Abschnitten unterschiedliche Wandstärken aufweisen kann. Dadurch kann ggf. eine Diffusion des Wasserstoffs durch das semipermeable Material gesteigert werden.

An das semipermeable Material sind entsprechend elektrische Kontakte angeordnet, die mit einer Stromquelle verbunden sind. Mit Hilfe dieser elektrischen Kontakte kann elektrische Energie auf das semipermeable Material beaufschlagt werden, um dieses zumindest zu Beginn zu erwärmen. Z.B. kann eine entsprechende Beaufschlagung durch elektrischen Wechselstrom oder Gleichstrom erfolgen. Die Beaufschlagung des elektrischen Stromes erfolgt dabei in Längsrichtung des z.B. in Form eines Rohrs ausgebildeten semipermeablen Materials. Insbesondere umfasst die Vorrichtung eine Regel- und Steuereinheit, die die Beaufschlagung des semipermeablen Materials mit Strom, insbesondere Wechselstrom regelt und steuert z.B. eine pulsierende Stromzufuhr, etc.

Die Vorrichtung kann weiterhin einen entsprechenden Auslass für den Wasserstoff und gegebenenfalls ein Gefäß zum Sammeln hiervon aufweisen.

Die Vorrichtung kann darüber hinaus mit üblichen Einrichtungen, z.B. Gaswäscher etc., ausgeführt sein, um das Rohgas aufzubereiten bzw. den abgeschiedenen Wasserstoff weiter zu prozessieren.

Zum Aufbau des Überdrucks für das Rohgas - auch als Prozessgas bezeichnet - kann ein Kompressor oder Pumpe vorgesehen sein. Zum Abziehen des abgeschiedenen reinen Wasserstoffs kann entsprechend zum Erhalt eines Unterdrucks eine Vakuumpumpe vorgesehen sein.

Die Vorrichtung kann schließlich auch Steuer-, Regel- und Messeinheiten mit entsprechenden Sensoren umfassen. Die Messeinheiten bestimmen dabei die Menge an abgeschiedenem Wasserstoff bzw. den Anteil an Wasserstoff im Rohgas und abgereicherten Rohgas sowie weitere Verfahrensparameter, wie Temperatur, etc. Die Steuer- und Regeleinheiten regeln die entsprechenden Drücke zum Zuführen und Abführen der verschiedenen Gase. Weiterhin erlauben die Steuer- und Regeleinheiten die Steuerung der angelegten Energie, z.B. der Wärmeenergie bzw. elektrischen Energie zur Erwärmung des semipermeablen Materials.

Die Vorrichtung kann weiterhin eine sein zur Gewinnung von hochfreiem Wasserstoff aus Rohgas mit einem ersten Druckgefäß mit Ableitungen für hochreinen Wasserstoff, einen im Innenraum des ersten Druckgefäßes im Innenbereich liegendem zweiten Druckgefäß, das gegenüber dem Innenraum des ersten Druckgefäßes abgeschlossen ist und dieser Innenbereich zumindest teilweise mit einem semipermeablen Material zum Innenraum des ersten Druckgefäßes abgegrenzt ist, wobei dieses semipermeable Material durchlässig ist für Wasserstoff zur Abscheidung von hochreinem Wasserstoff aus dem Rohgas, dadurch gekennzeichnet, dass das semipermeable Material ein Metall oder eine Metalllegierung ist und insbesondere für elektrische Energie, zumindest abschnittsweise beheizbar ist, insbesondere eingerichtet zur Durchführung des erfindungsgemäßen Verfahrens.

Des Weiteren kann das semipermeable Material magnetisch angeregt werden, z.B. durch ein magnetisches Wechselfeld. Dem Fachmann sind geeignete Mittel zum Anlegen des Magnetfeldes bekannt.

Die Vorrichtung kann weiterhin Einrichtungen zur lokalen Verringerung der Wasserstoffkonzentrationen am semipermeablen Material aufweisen.

Bevorzugte Ausführungsbeispiele der Erfindung werden nachfolgend anhand der Zeichnungen näher erläutert. Hierbei zeigen die Figuren folgendes:
- Fig.1:: Fig. 1 ist eine schematische Darstellung einer erfindungsgemäßen Vorrichtung zur Durchführung des erfindungsgemäßen Verfahrens.
- Fig. 2:: Fig. 2 zeigt einen Querschnitt durch ein Druckgefäß, worin zwei Rohrspiralen mit semipermeablem Material angeordnet sind.
- Fig. 3:: Fig. 3 zeigt die Konzentration an H₂ in Abhängigkeit von der Zeit.
- Fig. 4:: Fig. 4 zeigt den Einfluss der Stromstärke auf die H₂-Anreicherung.

### Zu den Figuren im Einzelnen:

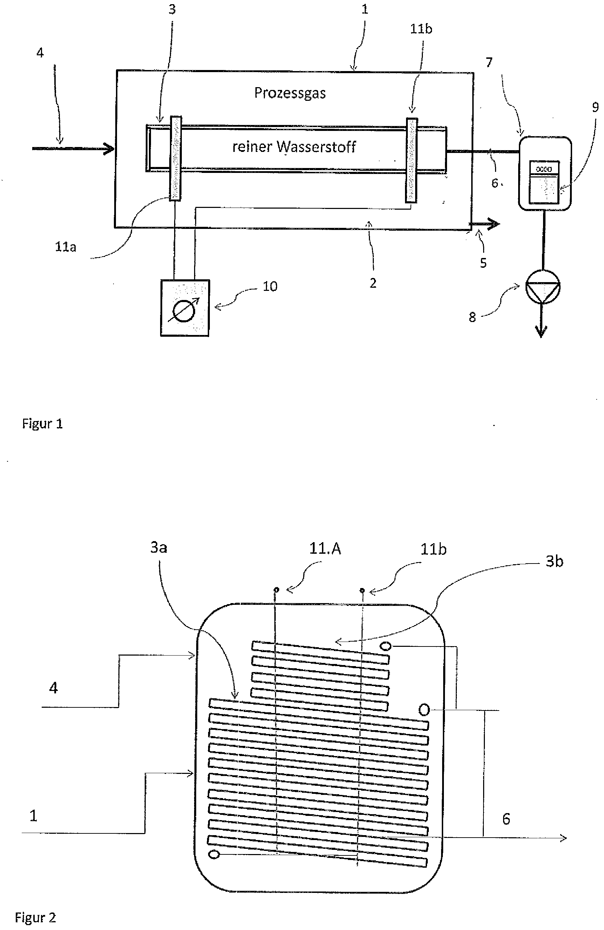

Die Fig. 1 zeigt schematisch eine Vorrichtung zum Aufreinigen von hochreinem Wasserstoff gemäß Anspruch 1. Dabei ist in dem Druckgefäß 1 mit dem Innenraum 2 ein abgeschlossener Innenbereich 3 mit einem semipermeablen Material im Innenraum 2 angeordnet. Dieser Innenbereich 3 ist dabei über elektrische Kontakte 11a und 11b mit einer Stromquelle 10 verbunden. Weiterhin ist dieser Innenbereich über den Auslass 6 für den abgeschiedenen Wasserstoff mit einem Unterdruckgefäß 7 verbunden. Mit Hilfe einer Vakuumpumpe 8 wird im Unterdruckgefäß 7 ein Unterdruck zum Abziehen des abgeschiedenen Wasserstoffs erzeugt in oder an dem Druckgefäß oder in anderen Bereichen des Systems zum Abführen des abgeschiedenen Wasserstoffs kann ein Sensor für die Bestimmung der Konzentration an Wasserstoff 9 angeordnet sein, um die Menge an abgeschiedenem Wasserstoff zu bestimmen. Die Vorrichtung kann ebenfalls weitere Sensoren in Form von Temperaturfühlern etc. aufweisen, um die entsprechenden Prozessparameter während des Prozesses zu bestimmen. Die entsprechenden Prozessparameter, die über die Sensoren aufgenommen werden, werden zur weiteren Bearbeitung an die Steuer- und Regeleinheiten (nicht dargestellt) weitergeleitet. Über diese Steuer- und Regeleinheiten können dann über entsprechende Einrichtungen der Druck des Rohgases bzw. abgereicherten Rohgases bzw. des abgeschiedenen Wasserstoffs geregelt werden, genauso wie die anzulegende Energie z.B. der entsprechende elektrische Strom, um den Prozess zu steuern.

Abgereichertes Rohgas wird über den Auslass 5 aus dem Druckgefäß 1 geführt.

In der Fig. 2 ist ein Querschnitt eines Druckbehälters einer Vorrichtung dargestellt. In dem Druckgefäß 1 wird Rohgas über die Zuleitung 4 zugeführt. Dargestellt sind eine äußere Rohrspirale 3a und eine innere Rohrspirale 3b, die den Innenbereich mit semipermeablem Material darstellen. Über die elektrischen Kontakte 11a und 11b kann entsprechend über geeignete Mittel zur elektrischen Energie eine Erwärmung stattfinden.

Das erhaltene abgeschiedene Wasserstoffgas wird über die Ableitung 6 mittels Unterdruck abgezogen.

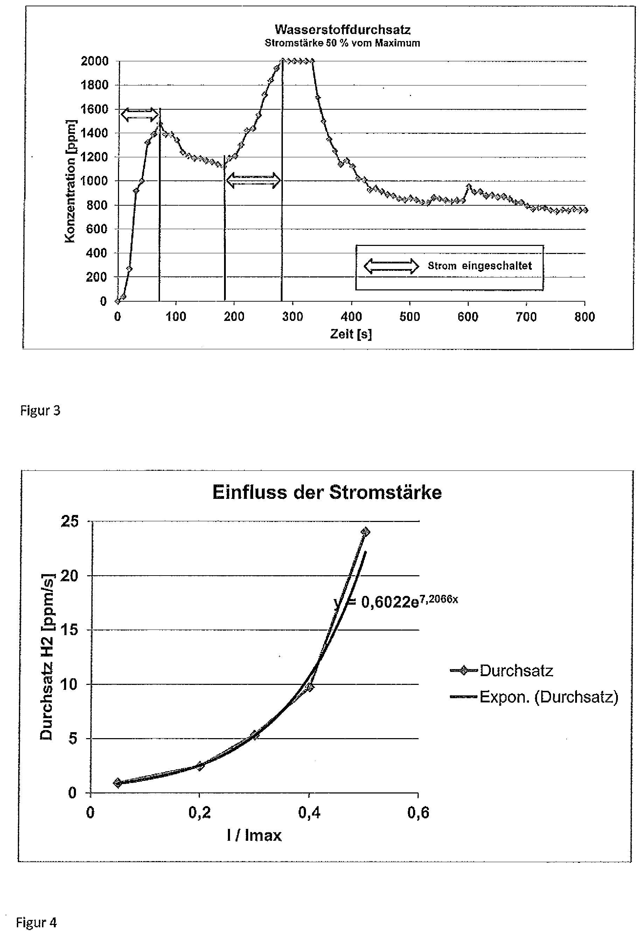

In der Fig. 3 ist die Wasserstoffkonzentration in Abhängigkeit von der Zeit und der Energiezufuhr dargestellt.

Wie aus der Messung deutlich wird, wird durch Anlegen eines elektrischen Stroms die Durchlässigkeit des semipermeablen Materials schnell und deutlich erhöht, die Konzentration an H₂ nimmt deutlich zu. Im Vergleich dazu steigt die Konzentration an H₂ ohne Energiezufuhr nur langsam an. Auch nach dem Stopp der Energiezufuhr nach ca. 300 Sekunden ist die Konzentration an H₂ im abgeschiedenen Gas deutlich erhöht.

In der Fig. 4 wird der Einfluss der Stromstärke bei Anlegen einer elektrischen Energie dargestellt. Wie zu erkennen ist, ist der Durchsatz an Wasserstoff exponentiell proportional zu der angelegten Stromstärke.

### Bezugszeichenliste

- 1: Druckgefäß
- 2: Innenraum
- 3, 3a, 3b: Innenbereich mit semipermeablem Material
- 4: Rohgaszufuhr
- 5: Rohgasauslass
- 6: Wasserstoffauslass
- 7: Unterdruckgefäß
- 8: Vakuumpumpe
- 9: H₂-Messsensor
- 10: Stromquelle
- 11a/11b: elektrische Kontakte

## Patentansprüche

1. Verfahren zur Gewinnung von hochreinem Wasserstoff aus einem Rohgas, wobei das Rohgas unter Druck in ein erstes Druckgefäß (1) geleitet wird und dieses erste Druckgefäß (1) zu einem zweiten Druckgefäß (3) zumindest teilweise mit einem semipermeablen Material abgegrenzt ist und das erste Druckgefäß zum zweiten Druckgefäß vollständig abgeschlossen ist, wobei der hochreine Wasserstoff über dieses semipermeable Material in das zweite Druckgefäß (3) abgeschieden wird, **dadurch gekennzeichnet, dass** das semipermeable Material ein Metall oder eine Metalllegierung ist und eines ist, das ferritisches Eisen und/oder Roheisen und/oder Reineisen umfasst und dieses semipermeable Material zumindest zu Beginn des Verfahrens erwärmt wird, für einen Zeitraum ausreichend die Menge an durchtretenden Wasserstoff zu erhöhen und diese Erwärmung zumindest unterbrochen wird.

2. Verfahren zur Gewinnung von hochreinem Wasserstoff aus einem Rohgas nach Anspruch 1, wobei das Rohgas unter Druck in ein Druckgefäß (1) geleitet wird und dieses Druckgefäß (1) einen Innenbereich (3), der das zweite Druckgefäß ausbildet, aufweist, der zum Innenraum (2) des Druckgefäßes (1) vollständig abgeschlossen ist, dieser Innenbereich (3) ist zumindest teilweise mit einem semipermeablen Material zum Innenraum (2) des Druckgefäßes (1) abgegrenzt und wobei der hochreine Wasserstoff über dieses semipermeable Material in den Innenbereich (3) abgeschieden wird.

3. Verfahren nach Anspruch 1 oder 2, **dadurch gekennzeichnet, dass** das semipermeable Material eines ist, das aus ferritischem Eisen und/oder Roheisen und/oder Reineisen besteht.

4. Verfahren nach einem der Ansprüche 1 bis 3, **dadurch gekennzeichnet, dass** das semipermeable Material kurzzeitig zu Beginn des Verfahrens erwärmt wird für einen Zeitraum, ausreichend die Menge an durchtretenden Wasserstoffgas zu erhöhen.

5. Verfahren nach einem der vorherigen Ansprüche, **dadurch gekennzeichnet, dass** das semipermeable Material mit Hilfe von Strom, insbesondere elektrischen Wechselstrom erwärmt wird, insbesondere mit Wechselstrom pulsierend erfolgt und/oder dass die Erwärmung mit einem Wechselstrom bei einer Stromdichte von mindestens 10 Ampere pro Quadratmillimeter, bevorzugt mindestens 20 Ampere pro Quadratmillimeter durchgeführt wird.

6. Verfahren nach einem der vorherigen Ansprüche, **dadurch gekennzeichnet, dass** mindestens zu Beginn des Verfahrens Strom insbesondere Wechselstrom, in Längsrichtung durch das semipermeable Material geleitet wird.

7. Verfahren nach einem der vorherigen Ansprüche, **dadurch gekennzeichnet, dass** das Rohgas mit einem Trägergas, insbesondere einem inerten Gas, wie CO₂, vermischt in das Druckgefäß eingebracht wird.

8. Verfahren nach einem der vorherigen Ansprüche, **dadurch gekennzeichnet, dass** der Wasserstoff, das sich im Inneren des Innenbereichs abscheidet, durch Unterdruck abgeleitet wird.

9. Verfahren nach einem der vorherigen Ansprüche, **dadurch gekennzeichnet, dass** das Rohgas mit einer Temperatur von kleiner 400° C, wie kleiner 300° C, insbesondere kleiner 200° C, wie mit Raumtemperatur in das Druckgefäß eingeleitet wird.

10. Verfahren nach einem der vorherigen Ansprüche, wobei das Metall oder die Metalllegierung Eisen ist oder umfasst und das semipermeable Material mit Wechselstrom mit einer Frequenz von mindestens 50 Hz kurzzeitig zu Beginn des Verfahrens und gegebenenfalls im weiteren Verlauf erneut beaufschlagt wird.

11. Verfahren nach einem der Ansprüche 1 bis 10 zur Gewinnung von hochreinem Wasserstoff aus einem Rohgas, wobei das Rohgas unter Druck in einen Innenbereich (3), der zum Innenraum (2) des Druckgefäßes (1) vollständig abgeschlossen ist, unter Druck geleitet wird, dieser Innenbereich (3) ist zumindest teilweise mit einem semipermeablen Material zum Innenraum (2) des Druckgefäßes abgegrenzt und wobei der hochreine Wasserstoff über dieses semipermeable Material in das Druckgefäß (1) abgeschieden wird.

## Claims

1. Process for obtaining high purity hydrogen from a crude gas, wherein the crude gas is passed under pressure into a first pressure vessel (1) and this pressure vessel (1) is at least partially delimited to a second pressure vessel (3) with a semipermeable material and the first pressure vessel (1) is completely sealed to the second pressure vessel (3), wherein the high purity hydrogen is separated via this semipermeable material into the second pressure vessel (3), **characterized in, that** the semipermeable material is a metal or a metal alloy and is one comprising ferritic iron and/or pig iron and/or ingot iron and said semipermeable material is heated at the start of the process at least for a period sufficient to increase the amount of permeating hydrogen and said heating is at least interrupted.

2. The process for obtaining high purity hydrogen from a crude gas according to claim 1, wherein the crude gas is passed under pressure into a pressure vessel (1) and that pressure vessel (1) has an inner region (3) forming the second pressure vessel, which is completely sealed off from the interior (2) of the pressure vessel (1), this inner region (3) is at least partly delimited from the interior (2) of the pressure vessel (1) by a semipermeable material and the high purity hydrogen being separated into the inner region (3) via this semipermeable material.

3. The process according to claim 1 or 2, **characterized in, that** the semipermeable material is one consisting of ferritic iron and/or pig iron and/or ingot iron.

4. The process according to any one of the claims 1 to 2, **characterized in, that** the semipermeable material is heated temporarily at the beginning of the process for a period of time sufficient to increase the amount of permeating hydrogen gas.

5. The process according to any one of the preceding claims, **characterized in, that** the semipermeable material is heated with the aid of current, in particular electric alternating current, particularly in a pulsating manner with alternating current and/or **in that** the heating is carried out with an alternating current at a current density of at least 10 ampere per square millimeter, preferably at least 20 ampere per square millimeter.

6. The process according to any one of the preceding claims, **characterized in, that** at least at the beginning of the process current, in particular alternating current, is passed in a longitudinal direction through the semipermeable material.

7. The process according to any one of the preceding claims, **characterized in, that** the raw gas is introduced into the pressure vessel mixed with a carrier gas, in particular, an inert gas like CO₂.

8. The process according to any one of the preceding claims, **characterized in, that** the hydrogen which is separated into the interior of the inner region is conducted away by negative pressure.

9. The process according to any one of the preceding claims, **characterized in, that** the crude gas is introduced into the pressure vessel with a temperature lower than 400°C, like lower 300°C, in particular lower 200°C, like room temperature.

10. The process according to any one of the preceding claims, wherein the metal or the metal alloy is or comprises iron and the semipermeable material is subject to alternating current with frequency of at least 50 Hertz for a short time at the beginning of the process and, if necessary again in the further course.

11. The process according to any one of the claims 1 to 10 for obtaining high purity hydrogen from a crude gas, wherein the crude gas is conducted under pressure into an inner region (3) which is completely sealed off from the interior (2) of the pressure vessel (1), under pressure, this inner region (3) is delimited at least partly with semipermeable material from the interior (2) of the pressure vessel and whereby the high purity hydrogen is permeated through the semipermeable membrane into the pressure vessel (1).

## Revendications

1. Procédé d'obtention d'hydrogène de haute pureté à partir d'un gaz brut, le gaz brut étant amené sous pression dans un premier récipient sous pression (1) et ce premier récipient sous pression (1) étant délimité au moins partiellement avec un matériau semi-perméable par rapport à un deuxième récipient sous pression (3) et le premier récipient sous pression étant complètement fermé par rapport au deuxième récipient sous pression, l'hydrogène de haute pureté étant déposé dans le deuxième récipient sous pression (3) par le biais de ce matériau semi-perméable,
**caractérisé en ce que** le matériau semi-perméable est un métal ou un alliage métallique et comprend du fer ferritique et/ou de la fonte brute et/ou du fer pur et ce matériau semi-perméable est chauffé au moins au début du procédé pendant un temps suffisant pour augmenter la quantité d'hydrogène qui traverse et ce chauffage est au moins interrompu.

2. Procédé d'obtention d'hydrogène de haute pureté à partir d'un gaz brut selon la revendication 1, le gaz brut étant amené sous pression dans un récipient sous pression (1) et ce récipient sous pression (1) comprenant une région intérieure (3) qui forme le deuxième récipient sous pression qui est complètement fermé par rapport à l'espace intérieur (2) du récipient sous pression (1), cette région intérieure (3) étant au moins partiellement délimitée par un matériau semi-perméable par rapport à l'espace intérieur (2) du récipient sous pression (1) et l'hydrogène de haute pureté étant déposé dans la région intérieure (3) par le biais de ce matériau semi-perméable.

3. Procédé selon la revendication 1 ou 2, **caractérisé en ce que** le matériau semi-perméable est un matériau comprenant du fer ferritique et/ou de la fonte brute et/ou du fer pur.

4. Procédé selon l'une des revendications 1 à 3, **caractérisé en ce que** le matériau semi-perméable est brièvement chauffé au début du procédé pendant une durée suffisante pour augmenter la quantité d'hydrogène gazeux qui traverse.

5. Procédé selon l'une des revendications précédentes, **caractérisé en ce que** le matériau semi-perméable est chauffé à l'aide d'un courant, notamment un courant électrique alternatif, notamment de manière pulsée avec un courant alternatif et/ou **en ce que** le chauffage est effectué avec courant alternatif à une densité de courant d'au moins 10 ampères par millimètre carré, de préférence d'au moins 20 ampères par millimètre carré.

6. Procédé selon l'une des revendications précédentes, **caractérisé en ce que**, au moins au début du procédé, un courant, en particulier un courant alternatif, est amené dans la direction longitudinale à travers le matériau semi-perméable.

7. Procédé selon l'une des revendications précédentes, **caractérisé en ce que** le gaz brut est introduit dans le récipient sous pression en étant mélangé à un gaz porteur, en particulier un gaz inerte, tel que du CO₂.

8. Procédé selon l'une des revendications précédentes, **caractérisé en ce que** l'hydrogène qui se dépose à l'intérieur de la région intérieure, est évacué par pression négative.

9. Procédé selon l'une des revendications précédentes, **caractérisé en ce que** le gaz brut est amené dans le récipient sous pression à une température inférieure à 400 °C, par exemple inférieure à 300 °C, en particulier inférieure à 200 °C, par exemple à la température ambiante.

10. Procédé selon l'une des revendications précédentes, le métal ou l'alliage métallique étant ou comprenant du fer et le matériau semi-perméable étant soumis à nouveau à un courant alternatif à une fréquence d'au moins 50 Hz brièvement au début du procédé et éventuellement ultérieurement.

11. Procédé selon l'une des revendications 1 à 10 destiné à obtenir de l'hydrogène de haute pureté à partir d'un gaz brut, le gaz brut étant amené sous pression dans une région intérieure (3) qui est complètement fermée par rapport à l'espace intérieur (2) du récipient sous pression (1), cette région intérieure (3) étant au moins partiellement délimitée par un matériau semi-perméable par rapport à l'espace intérieur (2) du récipient sous pression et l'hydrogène de haute pureté étant déposé dans le récipient sous pression (1) par l'intermédiaire de ce matériau semi-perméable.
